# EUROPEAN PATENT SPECIFICATION

(11) **EP 3 363 702 B1**
(45) Date of publication and mention of the grant of the patent: **03.06.2020**
(21) Application number: 18157153.0
(22) Date of filing: 16.02.2018
(51) Int. Cl.: B60T 8/36

(54) **BRAKE FLUID PRESSURE CONTROL DEVICE FOR VEHICLE**
BREMSFLÜSSIGKEITSDRUCKSTEUERUNGSVORRICHTUNG EINES FAHRZEUGS
DISPOSITIF DE CONTRÔLE DE PRESSION DE LIQUIDE DE FREIN POUR VÉHICULE

(30) Priority: 17.02.2017 JP 2017028496
(43) Date of publication of application: 22.08.2018
(73) Proprietor: NISSIN KOGYO CO., LTD., Nagano, 389-0514 (JP)
(72) Inventor: Chiba, Kentaro, Nagano, 389-0514 (JP); Kodama, Takuro, Nagano, 389-0514 (JP)
(74) Representative: Hoffmann Eitle

(56) References cited:
- EP-A1- 2 703 241
- WO-A1-2014/072266
- DE-A1-102011 006 309
- DE-T5-112014 003 868
- JP-A- 2007 168 456
- JP-A- 2008 062 667
- JP-B2- 5 026 923
- US-A1- 2003 194 886
- US-A1- 2007 108 401

## Description

### TECHNICAL FIELD

The present invention relates to the configuration of a control device for performing anti-lock brake control of a vehicle.

### BACKGROUND ART

As a brake fluid pressure control device, there is a technology, for example, a technology disclosed in Japanese Patent No. 5026923. In a brake fluid pressure control device disclosed in Japanese Patent No. 5026923, a coil unit is disposed inside a control chamber.

In order to increase the magnetic path area of a yoke part of the coil unit, it is necessary to increase the area of the yoke part. If the area of the yoke part is increased, the size of the coil unit is increased, and the size of the whole of the control device is increased. A structure capable of increasing the magnetic path area without increasing the size of the control device is desired.

In general, in a base, the surface is machined from a metal material by machining, and a hole is formed. At this time, the metal material is put on a surface plate, and the metal material is fixed to the surface plate with clamp fittings, and in this state, the surface is machined. Although not disclosed in Japanese Patent No. 5026923, clamp pedestals to which the clamp fittings are attached are additionally provided so as to extend outward from the metal material.

Since the clamp pedestals are additionally provided, the size of the metal material is increased, and the manufacturing cost is increased.

If the clamp pedestals are left, the size of the base is increased, and the size of the whole of the control device is increased.

It is demanded to reduce the size and manufacturing cost of a control device, and a structure capable of providing a clamp pedestal without increasing the size of a base is desired. DE-A1-10 2011 006 309 discloses a brake fluid pressure control devicehaving a housing including a peripheral wall part with chamfered corners, and a series of electromagnetic valves and coils with hexagonal yoke parts.

### SUMMARY

An object of the present invention is to provide a structure capable of providing a clamp pedestal while being capable of increasing the distance between yoke parts of adjacent coils and increasing the areas of the yoke parts, without increasing the size of a control device.

The invention provides a brake fluid pressure control device for a vehicle as recited in claim 1.

According to a first possible embodiment, a motor is provided inside the housing.

According to the invention, the peripheral wall part includes a chamfer part formed by chamfering the corner, and
the side surface of the yoke part and the chamfer part face each other.

According to a second possible embodiment, the peripheral wall part of the housing includes a flange part which is in contact with the base, and
the flange part protrudes outward from the peripheral wall part, and has the same shape of the peripheral wall part.

According to the invention, a clamp pedestal is provided at a part of the base which protrudes from the housing.

According to a third possible embodiment, the storage part includes a stopper part which prevents rotation of the electromagnetic coil.

According to a fourth possible embodiment, the stopper part includes a mounting part for fastening the housing to the base.

According to the invention, since the flat side surfaces of the yoke part is disposed at the corner of the quadrangular shape, the distance between yokes of adjacent coils is increased. Therefore, it is possible to increase the area of the yoke part, and it is possible to increase the magnetic path area of the yoke part, without increasing the size of the housing.

According to the first possible embodiment of the invention, since the motor is provided inside the housing, the size of the brake fluid pressure control device for a vehicle is decreased.

According to the invention, by chamfering the peripheral wall part of the housing, it is possible to provide the clamp pedestal to be used during processing, at the part of the base which protrudes from the peripheral wall part, without increasing the size of the base.

According to the second possible embodiment of the invention, since the flange part which is in contact with the base is provided at the housing, it is possible to secure the contact surface of the housing and the base, and thus it is possible to stably mount the housing on the base.

According to the invention, the clamp pedestal is provided at the part of the base which protrudes from the housing.

According to the third possible embodiment of the invention, since the stopper part is provided inside the housing, the assembling property of the coil and the base is improved.

According to the fourth possible embodiment of the invention, the mounting part is provided at the storage part inside the housing. As compared to the case of providing the mounting part outside the housing, according to the present invention, it is possible to reduce the size of the housing.

### BRIEF DESCRIPTION OF THE DRAWINGS

FIG. 1 is a base configuration diagram of a brake fluid pressure control device for a vehicle capable of handling two systems according to the present invention.
FIG. 2 is a perspective view of the brake fluid pressure control device for a vehicle capable of handling two systems.
FIG. 3 is a cross-sectional view of the brake fluid pressure control device for a vehicle capable of handling two systems.
FIG. 4 is a cross-sectional view taken along a line 4-4 of FIG. 3.
FIG. 5 is a base configuration diagram of a brake fluid pressure control device for a vehicle capable of handling one system according to the present invention.
FIG. 6 is a plan view of the brake fluid pressure control device for a vehicle.
FIG. 7 is a cross-sectional view taken along a line 7-7 of FIG. 6.

### DETAILED DESCRIPTION

Embodiments of the present invention will be described below on the basis of the accompanying drawings. By the way, the drawings should be viewed in the direction of reference symbols.

Also, a control device for controlling the fluid pressures of a front-wheel brake and a rear-wheel brake will be referred to as a brake fluid pressure control device for a vehicle capable of handling two systems, and a control device for controlling the fluid pressure of one of a front-wheel brake and a rear-wheel brake will be referred to as a brake fluid pressure control device for a vehicle capable of handling one system.

A first example will be described.

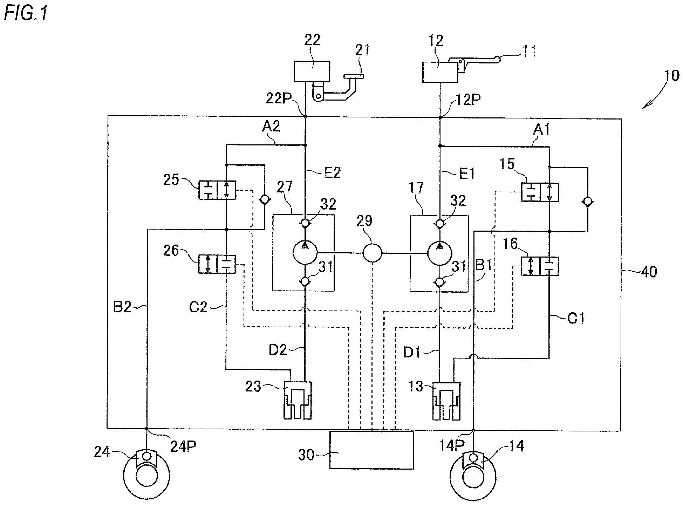

As shown in FIG. 1, a brake fluid pressure control device 10 for a vehicle capable of handling two systems includes: a first master cylinder 12 which pressurizes a hydraulic fluid in response to an operation on a brake lever, thereby producing a fluid pressure; a first reservoir 13 which temporarily stores the hydraulic fluid released from a front-wheel brake caliper 14; a first inlet control valve 15 and a first outlet control valve 16 which are assembling components that are installed between the first master cylinder 12 and the front-wheel brake caliper 14, the first inlet control valve 15 which is a normally open type electromagnetic valve, the first outlet control valve 16 which is a normally closed type electromagnetic valve; a first pump 17 which is an assembling component that is sucks the hydraulic fluid stored in the first reservoir 13 and returns the hydraulic fluid toward the first master cylinder 12; a second master cylinder 22 which pressurizes the hydraulic fluid in response to an operation on a brake pedal 21, thereby producing a fluid pressure; a second reservoir 23 which temporarily stores the hydraulic fluid released from a rear-wheel brake caliper 24; a second inlet control valve 25 and a second outlet control valve 26 which are assembling components installed between the second master cylinder 22 and the rear-wheel brake caliper 24, the second inlet control valve 25 which is a normally open type electromagnetic valve, the second outlet control valve 26 which is a normally closed type electromagnetic valve; a second pump 27 which is an assembling component that sucks the hydraulic fluid stored in the second reservoir 23 and returns the hydraulic fluid toward the second master cylinder 22; a motor 29 which drives the first and second pumps 17 and 27; a control device 30 which performs driving control on the motor 29 and opening and closing control on the first and second inlet control valves 15 and 25 and the first and second outlet control valves 16 and 26; and brake fluid passages A1, B1, C1, D1, and E1 of a first system and brake fluid passages A2, B2, C2, D2, and E2 of a second system which are provided in a base 40 and flow a brake fluid.

Here, the brake fluid passage A1 is a fluid passage extending from an inlet port 12P to the first inlet control valve 15, and the brake fluid passage B1 is a fluid pressure extending from the first inlet control valve 15 to an outlet port 14P. Also, the brake fluid passage C1 is a fluid passage extending from the brake fluid passage B1 to the first reservoir 13, and the brake fluid passage D1 is a fluid passage extending from the first reservoir 13 to the first pump 17. Further, the brake fluid passage E1 is a fluid passage extending from the first pump 17 to the brake fluid passage A1. With respect to the brake fluid passages A2, B2, C2, D2, and E2, since a description will be a duplicate, a description will not be made.

Suction valves 31 are installed on the suction sides of the first and second pumps 17 and 27, respectively, and discharge valves 32 are installed on the discharge sides of the first and second pumps 17 and 27, respectively.

Also, the base 40 includes the inlet port 12P to which a fluid passage (a brake pipe) extending from the first master cylinder 12 is connected, an inlet port 22P to which a fluid passage (a brake pipe) extending from the second master cylinder 22 is connected, the outlet port 14P to which a fluid passage (a brake pipe) extending to the front-wheel brake caliper 14 is connected, and an outlet port 24P to which a fluid passage (a brake pipe) extending to the rear-wheel brake caliper 24 is connected.

Now, the operation of the brake fluid pressure control device 10 for a vehicle will be described. However, since the first system from the brake pedal 21 to the front-wheel brake caliper 14 and the second system from the brake pedal 21 to the rear-wheel brake caliper 24 are the same in the operation, only the first system will be described.

### • State where ABS is not operated

When it is not required to lock a front wheel, the control device 30 stops the first pump 17, and opens the first inlet control valve 15, and closes the first outlet control valve 16. In this state, if the brake lever 11 is operated to the braking side, the fluid pressure is increased by the first master cylinder 12, and this fluid pressure is transmitted to the front-wheel brake caliper 14 via the first inlet control valve 15.

### • ABS (Depressurization Mode)

If it is nearly required to lock the front wheel, the control device 30 closes the first inlet control valve 15, and opens the first outlet control valve 16. The fluid pressure in the front-wheel brake caliper 14 is released to the first reservoir 13 via the first outlet control valve 16. By this, the brake fluid pressure of the front-wheel brake caliper 14 is decreased.

### • ABS (Hold Mode)

The control device 30 closes both of the first inlet control valve 15 and the first outlet control valve 16. By this, the brake fluid pressure of the front-wheel brake caliper 14 is held constantly.

### • ABS (Pressurization Mode)

When increasing the brake fluid pressure, the control device 30 opens the first inlet control valve 15, and closes the first outlet control valve 16. By this, the fluid pressure produced by the master cylinder 12 is transmitted to the front-wheel brake caliper 14. By this, the brake fluid pressure of the front-wheel brake caliper 14 is increased.

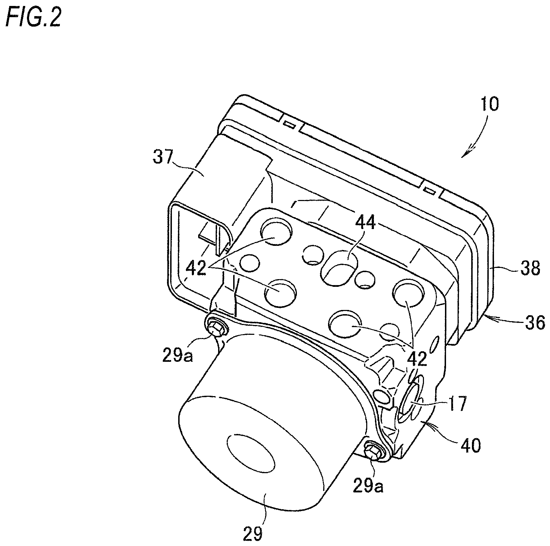

As shown in FIG. 2, the brake fluid pressure control device 10 for a vehicle includes the base 40 having a block shape, a housing 36 mounted on the base 40, and the motor 29 mounted on the base 40. On the housing 36, a cover 38 is put.

In one face of the base 40, insertion holes 42 for inserting brake pipes are formed at parts corresponding to the inlet ports 12P and 22P and the outlet ports 14P and 24P described with FIG. 1, and an oval recess 44 doubling as a clamp hole is formed at a substantially central part.

Also, the motor 29 is mounted to the base 40 with a plurality of screws 29a, and the housing 36 is integrally formed with a connector part 37 which extends along the base 40.

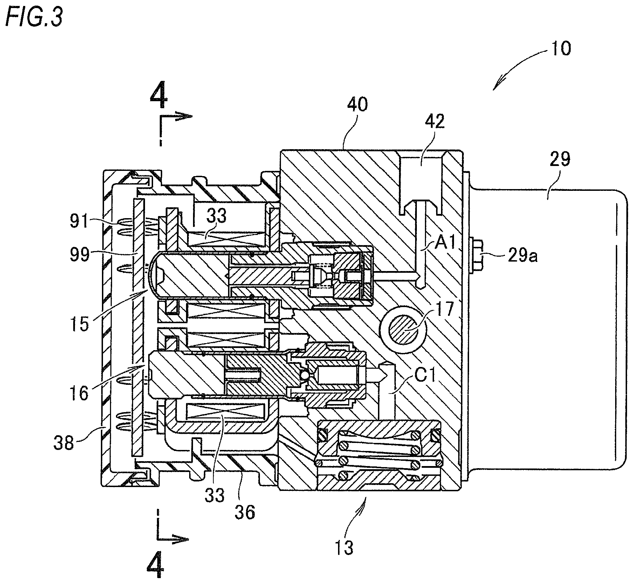

As shown in FIG. 3, in the base 40, an electromagnetic valve 15 to serve as the first inlet control valve and an electromagnetic valve 16 to serve as the first outlet control valve are mounted, and the first reservoir 13 is embedded, and the brake fluid passages A1, C1, and so on are formed, and the first pump 17 is installed between the brake fluid passage A1 and the brake fluid passage C1.

The electromagnetic valve 15 and the electromagnetic valve 16 protrude from the base 40 by about a half of the length in the axial direction of the electromagnetic valve, and these protruding parts are stored in the housing 36. The electromagnetic valve 15 and the electromagnetic valve 16 have electromagnetic coils 33 for driving, respectively.

In the housing 36, a control board 99 is disposed, and this control board 99 and the electromagnetic coils 33 are electrically connected through terminals 91.

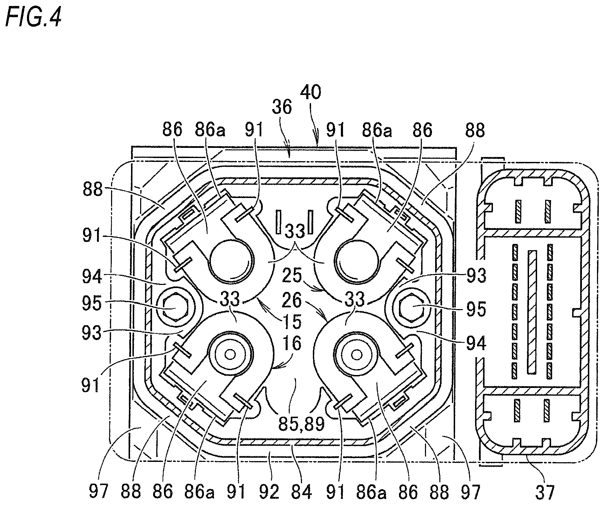

As shown in FIG. 4, the housing 36 includes a peripheral wall part 84 which includes openings formed on the front side and the rear side, a board storage part 85 which stores the control board (the reference symbol "99" in FIG. 3), and the connector part 37.

The electromagnetic valve 15, the electromagnetic valve 16, an electromagnetic valve 25, and an electromagnetic valve 26 include electromagnetic coils 33, respectively. The electromagnetic coils 33 include yoke parts 86 having flat side surfaces 86a.

The peripheral wall part 84 has a substantially quadrangular shape in the axial direction, and includes chamfer parts 88 formed by chamfering a plurality of corners, respectively, and, inside the peripheral wall part 84 configured as described, a storage chamber 89 as a storage part which stores the four electromagnetic valves 15, 16, 25, and 26 is provided.

Further, the individual electromagnetic valves 15, 16, 25, and 26 are stored in the storage chamber 89 such that the side surfaces 86a of the yoke parts 86 face each other. It is possible to widen the space between the adjacent yoke parts 86. As a result, the distances between the terminals 91 and 91 extending from the electromagnetic coils 33 are increased, and the areas of the yoke parts 86 are increased. Therefore, it is possible to increase the magnetic path areas of the yoke parts 86 without increasing the size of the housing 36.

Also, since the peripheral wall part 84 of the housing 36 is chamfered, it is possible to provide clamp pedestals 97 to be used during processing, at parts of the base 40 which protrude from the peripheral wall part 84, without increasing the size of the base 40.

Also, the peripheral wall part 84 of the housing 36 includes a flange part 92 protruding outward and abutting on the base 40. The flange part 92 has the same shape as that of the peripheral wall part 84. The peripheral wall part 84 of the housing 36 can have (can sufficiently secure) the contact surface with the base 40, and thus can be stably mounted to the base 40.

Further, the storage chamber 89 of the housing 36 includes a plurality of stopper parts 93 which prevent rotation of the electromagnetic coils 33. At least two of the plurality of stopper parts 93 include mounting parts 94 to be used to fasten the housing 36 to the base 40, and the mounting parts 94 are formed with through holes through which fastening bolts 95 pass. In other words, the mounting parts 94 are provided inside the storage chamber 89, and thus the size of the housing 36 is reduced as compared to the case where the mounting parts 94 are provided outside the storage chamber 89.

In the present example, the mounting part 94 is provided at the stopper part 93, however, the mounting part 94 may not be provided at the stopper part 93. In other words, the stopper part 93 and the mounting part 94 may be separately provided.

Further, a face of the base 40 which is in contact with the housing 36 is formed in the same shape as that of the housing 36. Since the face is formed in this shape, it is possible to easily provide the clamp pedestals 97 and 97 at the corners of the base 40 visible through the chamfer parts 88 of the housing 36.

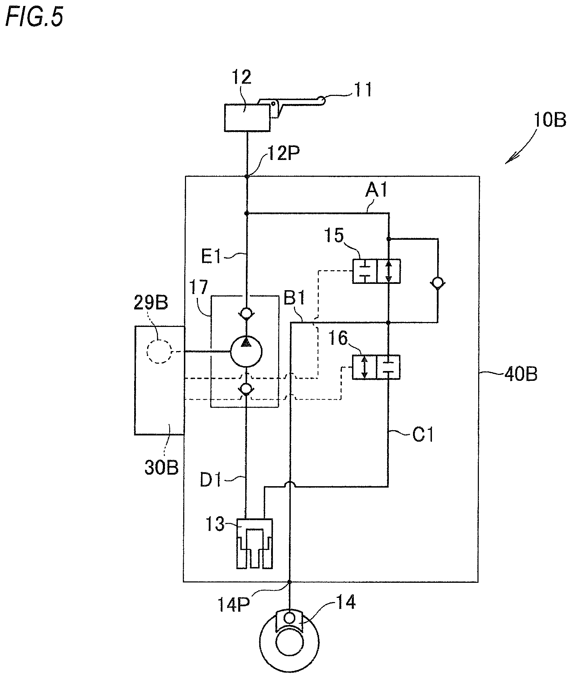

Now, a second example will be described on the basis of FIG. 5 to FIG. 7.

As shown in FIG. 5, a brake fluid pressure control device 10B for a vehicle capable of handling one system includes: a master cylinder 12 which pressurizes a hydraulic fluid in response to an operation on a brake lever 11, thereby producing a fluid pressure; a reservoir 13 which temporarily stores the hydraulic fluid released from a front-wheel brake caliper 14; an inlet control valve 15 and an outlet control valve 16 which are installed between the master cylinder 12 and the front-wheel brake caliper 14, the inlet control valve 15 which is a normally open type electromagnetic valve, the outlet control valve 16 which is a normally closed type electromagnetic valve; a pump 17 which sucks the hydraulic fluid stored in the reservoir 13 and returns the hydraulic fluid toward the master cylinder 12; a motor 29B which drives the pump 17; a control device 30B which performs driving control on the motor 29B and opening and closing control on the inlet control valve 15 and the outlet control valve 16; and brake fluid passages A1, B1, C1, D1, and E1 which are provided in a base 40B and flow a brake fluid.

Here, the brake fluid passage A1 is a fluid passage extending from an inlet port 12P to the inlet control valve 15, and the brake fluid passage B1 is a fluid pressure extending from the inlet control valve 15 to an outlet port 14P. Also, the brake fluid passage C1 is a fluid passage extending from the brake fluid passage B1 to the reservoir 13, and the brake fluid passage D1 is a fluid passage extending from the reservoir 13 to the pump 17. Further, the brake fluid passage E1 is a fluid passage extending from the pump 17 to the brake fluid passage A1.

Now, the operation of the brake fluid pressure control device 10B for a vehicle will be described.

### • State where ABS is not operated

When it is not required to lock a front wheel, the control device 30B stops the pump 17, and opens the inlet control valve 15, and closes the outlet control valve 16. In this state, if the brake lever 11 is operated to the braking side, the fluid pressure is increased by the master cylinder 12, and this fluid pressure is transmitted to the front-wheel brake caliper 14 via the inlet control valve 15.

### • ABS (Depressurization Mode)

If it is nearly required to lock the front wheel, the control device 30B closes the inlet control valve 15, and opens the outlet control valve 16. The fluid pressure in the front-wheel brake caliper 14 is released to the reservoir 13 via the outlet control valve 16. By this, the brake fluid pressure of the front-wheel brake caliper 14 is decreased.

### • ABS (Hold Mode)

The control device 30B closes both of the inlet control valve 15 and the outlet control valve 16. By this, the brake fluid pressure of the front-wheel brake caliper 14 is held constantly.

### • ABS (Pressurization Mode)

When increasing the brake fluid pressure, the control device 30B opens the inlet control valve 15, and closes the outlet control valve 16. By this, the fluid pressure produced by the master cylinder 12 is transmitted to the front-wheel brake caliper 14. By this, the brake fluid pressure of the front-wheel brake caliper 14 is increased.

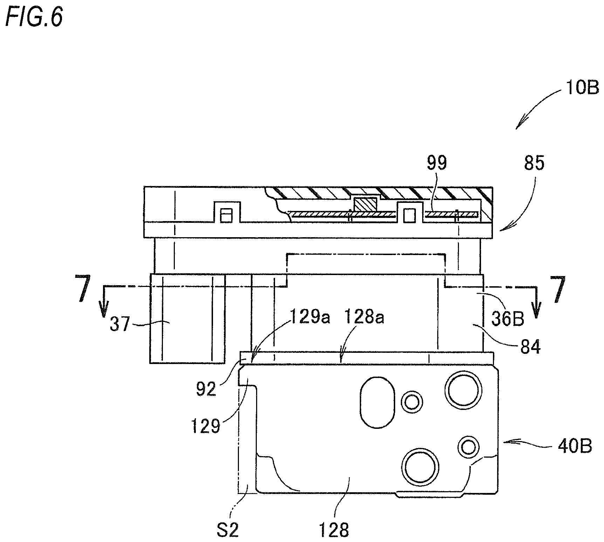

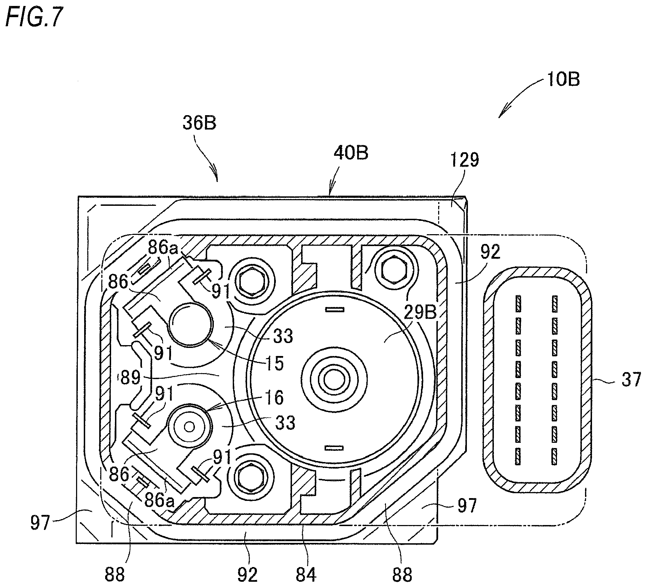

FIG. 6 is a plan view of the brake fluid pressure control device for a vehicle, and FIG. 7 is a cross-sectional view taken along a line 7-7 of FIG. 6.

As shown in FIG. 6, a housing 36B includes a peripheral wall part 84 which includes openings formed on the front side and the rear side and one side of which is in contact with the base 40B, a board storage part 85 which is provided on the other side of the peripheral wall part 84 and which stores a control board 99, and a connector part 37 which protrudes from the board storage part 85 toward the base 40B.

As shown in FIG. 7, an electromagnetic valve 15 to serve the inlet control valve and an electromagnetic valve 16 to serve as the outlet control valve include electromagnetic coils 33. The electromagnetic coils 33 includes yoke parts 86 having flat side surfaces 86a.

The peripheral wall part 84 has a substantially quadrangular shape in the axial direction, and includes at least one chamfer part 88 formed by chamfering at least one part, and, inside the peripheral wall part 84 configured as described, a storage chamber 89 which stores the two electromagnetic valves 15 and 16, the electromagnetic coils 33 and 33, and the motor 29B is provided.

Further, the individual electromagnetic valves 15 and 16 are stored in the storage chamber 89 such that the side surfaces 86a of the yoke parts 86 and the chamfer parts 88 face each other. It is possible to widen the spaces between the adjacent yoke parts 86. As a result, the distances between the terminals 91 and 91 extending from the electromagnetic coils 33 and 33 are increased, and the areas of the yoke parts 86 are increased. Therefore, it is possible to increase the magnetic path areas of the yoke parts 86 without increasing the size of the housing 36B.

Also, since the peripheral wall part 84 of the housing 36B is chamfered, it is possible to provide clamp pedestals 97 to be used during processing, at parts of the base 40B which protrude from the peripheral wall part 84, without increasing the size of the base 40B.

As shown in FIG. 6, in the brake fluid pressure control device 10B for a vehicle including the base 40B and the housing 36B which is mounted on one face of the base 40B, the base 40B is composed of a main body part 128, and a bulging part 129 having a protruding eave shape and bulging laterally from at least one side of the main body part 128 in order to secure a seal width. The main body part 128 includes a housing mounting surface 128a to which the housing 36B is mounted, and similarly, the bulging part 129 includes a housing mounting surface 129a to which the housing 36B is mounted.

The flange part 92 of the housing 36B is received by the housing mounting surface 129a of the bulging part 129 and the housing mounting surface 128a of the main body part 128, whereby the housing 36B is mounted on the main body part 128 and the bulging part 129.

As apparent from FIG. 6, the bulging part 129 locally protrudes from the main body part 128 like an eave. As compared to the case of lengthening the whole of the main body part 128, it is possible to thin the wall by a volume S2 shown by an imaginary line, and thus it is possible to reduce the weight of the base 40B.

In other words, by providing the bulging part 129, it is possible to secure a surface for sealing with the housing 36B while reduce the weight of the main body part 128 of the base 40B, and as a result, it is possible to reduce the weight of the whole of the brake fluid pressure control device 10B for a vehicle.

Further, the present invention is suitable for a motorcycle, however, it can also be applied to a tricycle, and can be applied to a general vehicle as well.

The present invention is suitable for a motorcycle.

## Claims

1. A brake fluid pressure control device (10) for a vehicle, the brake fluid pressure control device (10) comprising:
a base (40) which includes a brake fluid passage (A1-E1, A2-E2);
an electromagnetic valve (15, 16, 25, 26) which opens and closes the brake fluid passage (A1-E1, A2-E2);
an electromagnetic coil (33) which drives the electromagnetic valve (15, 16, 25, 26);
a control board (99) which controls the electromagnetic valve (15, 16, 25, 26) and the electromagnetic coil (33); and
a housing (36) which stores the electromagnetic valve (15, 16, 25, 26), the electromagnetic coil (33), and the control board (99), wherein
the housing (36) includes: a peripheral wall part (84) which includes openings formed on a front side and a rear side, wherein one of the front and rear sides of the peripheral wall part (84) is in contact with the base (40); a board storage part (85) which is provided on the other one of the front and rear sides of the peripheral wall part (84) and which stores the control board (99); and a connector part (37),
the peripheral wall part (84) has a substantially quadrangular shape in an axial direction of the electromagnetic valve (15, 16, 25, 26),
a storage part (89) which stores the electromagnetic valve (15, 16, 25, 26) and the electromagnetic coil (33) is provided inside the peripheral wall part (84),
the electromagnetic coil (33) includes a yoke part (86) having a flat side surface (86a),
the peripheral wall part (84) includes a chamfer part (88) formed by chamfering a corner thereof,
the electromagnetic coil (33) is stored in the storage part (89) such that the side surface (86a) of the yoke part (86) and the chamfer part (88) formed by chamfering the corner of the peripheral wall part (84) face each other, and
a clamp pedestal (97) is provided at a corner of the base (40) which protrudes beyond the chamfer part (88) of the peripheral wall part (84) of the housing (36).

2. The brake fluid pressure control device (10) according to claim 1, **characterized in that** a motor (29B) is provided inside the housing (36).

3. The brake fluid pressure control device (10) according to any one of claims 1 and 2, **characterized in that**
the peripheral wall part (84) of the housing (36) includes a flange part (92) which is in contact with the base (40), and
the flange part (92) protrudes outward from the peripheral wall part (84), and has the same shape of the peripheral wall part (84).

4. The brake fluid pressure control device (10) according to any one of claims 1 to 3, **characterized in that** the storage part (89) includes a stopper part (93) which prevents rotation of the electromagnetic coil (33).

5. The brake fluid pressure control device (10) according to claim 4, **characterized in that** the stopper part (93) includes a mounting part (94) for fastening the housing (36) to the base (40).

## Patentansprüche

1. Bremsflüssigkeitsdrucksteuerungsvorrichtung (10) für ein Fahrzeug, wobei die Bremsflüssigkeitsdrucksteuerungsvorrichtung (10) umfasst:
eine Basis (40), die einen Bremsflüssigkeitsdurchlass (A1-E1, A2-E2) beinhaltet;
ein elektromagnetisches Ventil (15, 16, 25, 26), das den Bremsflüssigkeitsdurchlass (A1-E1, A2-E2) öffnet und schließt;
eine elektromagnetische Spule (33), die das elektromagnetische Ventil (15, 16, 25, 26) antreibt;
eine Steuerungsplatte (99), die das elektromagnetische Ventil (15, 16, 25, 26) und die elektromagnetische Spule (33) steuert; und
ein Gehäuse (36), das das elektromagnetische Ventil (15, 16, 25, 26), die elektromagnetische Spule (33) und die Steuerungsplatte (99) lagert, wobei
das Gehäuse (36) beinhaltet: ein Umfangswandteil (84), das Öffnungen beinhaltet, die an einer Vorderseite und einer Rückseite gebildet sind, wobei eine der Vorder- und Rückseite des Umfangswandteils (84) in Kontakt mit der Basis (40) ist; ein Plattenlagerteil (85), das an der anderen der Vorder- und Rückseite des Umfangswandteils (84) bereitgestellt ist und das die Steuerungsplatte (99) lagert; und ein Verbindungsstückteil (37),
das Umfangswandteil (84) eine im Wesentlichen viereckige Form in einer Achsrichtung des elektromagnetischen Ventils (15, 16, 25, 26) aufweist,
ein Speicherteil (89), das das elektromagnetische Ventil (15, 16, 25, 26) und die elektromagnetische Spule (33) lagert, innerhalb des Umfangswandteils (84) bereitgestellt ist,
die elektromagnetische Spule (33) ein Jochteil (86) beinhaltet, das eine flache Seitenoberfläche (86a) aufweist,
das Umfangswandteil (84) ein Fasenteil (88) beinhaltet, das gebildet wird, indem eine Ecke davon angefast wird,
die elektromagnetische Spule (33) in dem Lagerteil (89) gelagert ist, sodass die Seitenoberfläche (86a) des Jochteils (86) und des Fasenteils (88), das gebildet wird, indem die Ecke des Umfangswandteils (84) angefast wird, zueinander zeigen, und
ein Klemmsockel (97) an einer Ecke der Basis (40) bereitgestellt ist, der über das Fasenteil (88) des Umfangswandteils (84) des Gehäuses (36) vorragt.

2. Bremsflüssigkeitsdrucksteuerungsvorrichtung (10) nach Anspruch 1, **dadurch gekennzeichnet, dass** ein Motor (29B) innerhalb des Gehäuses (36) bereitgestellt ist.

3. Bremsflüssigkeitsdrucksteuerungsvorrichtung (10) nach einem der Ansprüche 1 und 2, **dadurch gekennzeichnet, dass**
das Umfangswandteil (84) des Gehäuses (36) ein Flanschteil (92) beinhaltet, das in Kontakt mit der Basis (40) ist, und
das Flanschteil (92) von dem Umfangswandteil (84) nach außen vorragt und dieselbe Form des Umfangswandteils (84) aufweist.

4. Bremsflüssigkeitsdrucksteuerungsvorrichtung (10) nach einem der Ansprüche 1 bis 3, **dadurch gekennzeichnet, dass** das Lagerteil (89) ein Stopperteil (93) beinhaltet, das Drehung der elektromagnetischen Spule (33) verhindert.

5. Bremsflüssigkeitsdrucksteuerungsvorrichtung (10) nach Anspruch 4, **dadurch gekennzeichnet, dass** das Stopperteil (93) ein Montageteil (94) zum Befestigen des Gehäuses (36) an der Basis (40) beinhaltet.

## Revendications

1. Dispositif de commande de pression de liquide de frein (10) pour un véhicule, le dispositif de commande de pression de liquide de frein (10) comprenant :
une base (40) qui inclut un passage de liquide de frein (A1-E1, A2-E2) ;
une soupape électromagnétique (15, 16, 25, 26) qui ouvre et ferme le passage de liquide de frein (A1-E1, A2-E2) ;
une bobine électromagnétique (33) qui entraîne la soupape électromagnétique (15, 16, 25, 26) ;
une carte de commande (99) qui commande la soupape électromagnétique (15, 16, 25, 26) et la bobine électromagnétique (33) ; et
un boîtier (36) qui stocke la soupape électromagnétique (15, 16, 25, 26), la bobine électromagnétique (33) et la carte de commande (99), dans lequel
le boîtier (36) inclut : une partie de paroi périphérique (84) qui inclut des ouvertures formées sur un côté avant et un côté arrière, dans lequel un premier des côtés avant et arrière de la partie de paroi périphérique (84) est en contact avec la base (40) ; une partie de stockage de carte (85) qui est prévue sur l'autre des côtés avant et arrière de la partie de paroi périphérique (84) et qui stocke la carte de commande (99) ; et une partie de connecteur (37),
la partie de paroi périphérique (84) présente une forme sensiblement quadrangulaire dans une direction axiale de la soupape électromagnétique (15, 16, 25, 26),
une partie de stockage (89) qui stocke la soupape électromagnétique (15, 16, 25, 26) et la bobine électromagnétique (33) est prévue à l'intérieur de la partie de paroi périphérique (84),
la bobine électromagnétique (33) inclut une partie de culasse (86) présentant une surface latérale plate (86a),
la partie de paroi périphérique (84) inclut une partie de chanfrein (88) formée en chanfreinant un coin de celle-ci,
la bobine électromagnétique (33) est stockée dans la partie de stockage (89) de telle sorte que la surface latérale (86a) de la partie de culasse (86) et la partie de chanfrein (88) sont formées en chanfreinant le coin de la partie de paroi périphérique (84) face à face, et
un socle de serrage (97) est prévu au niveau d'un coin de la base (40) qui fait saillie au-delà de la partie de chanfrein (88) de la partie de paroi périphérique (84) du boîtier (36).

2. Dispositif de commande de pression de liquide de frein (10) selon la revendication 1, **caractérisé en ce qu'**un moteur (29B) est prévu à l'intérieur du boîtier (36).

3. Dispositif de commande de pression de liquide de frein (10) selon l'une quelconque des revendications 1 et 2, **caractérisé en ce que**
la partie de paroi périphérique (84) du boîtier (36) inclut une partie de bride (92) qui est en contact avec la base (40), et
la partie de bride (92) fait saillie vers l'extérieur à partir de la partie de paroi périphérique (84) et présente la même forme que la partie de paroi périphérique (84).

4. Dispositif de commande de pression de liquide de frein (10) selon l'une quelconque des revendications 1 à 3, **caractérisé en ce que** la partie de stockage (89) inclut une partie de butée (93) qui empêche une rotation de la bobine électromagnétique (33).

5. Dispositif de commande de pression de liquide de frein (10) selon la revendication 4, **caractérisé en ce que** la partie d'arrêt (93) inclut une partie de montage (94) pour fixer le boîtier (36) à la base (40).
